# EUROPEAN PATENT APPLICATION

(11) **EP 3 842 706 A1**
(43) Date of publication of application: **30.06.2021**
(21) Application number: 20217013.0
(22) Date of filing: 23.12.2020
(51) Int. Cl.: F24S 10/70, H02S 40/44, F24S 10/75, F24S 20/00

(54) **SOLAR THERMAL MODULE FOR THE CONVERSION OF SUNLIGHT ENERGY INTO HEAT**

(30) Priority: 23.12.2019 NL 2024568
(71) Applicant: R.F. van der Ende beheer B.V., 2626 EH Schipluiden (NL)
(72) Inventor: van der Ende, Ronald Felix, 2626 EH Schipluiden (NL)
(74) Representative: Visser-Luirink, Gesina

(57) **Abstract**

Described is a solar thermal module (2) for the conversion of solar energy into heat, comprising at least one tube in meander form (4a) having therearound an at least substantially seamlessly fitting extrusion profile (5a), wherein the tube (4a) is substantially D-shaped in cross-section and the extrusion profile (5a) has a corresponding D-shape, wherein a liquid or gaseous heat carrier is situated in the at least one tube (4a). Further described is a photovoltaic thermal (PVT) device (0) for the combined conversion of solar energy into electric current and heat, comprising such a solar thermal module (2) for the conversion of solar energy into heat, wherein the extrusion profile (5a) or the extrusion profiles (5a, 5b) are attached substantially seamlessly to a photovoltaic (PV) plate (1). Also described is a framework comprising such a PVT device, wherein the PV plate (1) and the solar thermal module (2) are disposed inside a frame (6) such that the solar radiation acts directly on the PV plate (1) and the solar thermal module (2) is situated substantially behind the PV plate (1) in the direction of propagation of the solar radiation.

## Description

The invention relates to a solar thermal module for the conversion of solar energy into heat.

The invention also relates to a photovoltaic thermal (PVT) device for combined conversion of solar energy into electric current and heat, which comprises such a solar thermal module. Finally, the invention relates to a method for converting solar energy into electric current and heat while applying such a PVT device.

A PVT device according to the invention comprises a photovoltaic (PV) module for the PV conversion of solar radiation energy into electric current and heat. The electromagnetic radiation emitted by the sun is here collected by solar cells and converted at least partially into electric current. The PVT device further comprises a solar thermal module for absorbing thermal energy, or heat, which is generated at least partially by solar energy. In the solar thermal module a heat transfer medium in liquid or gas form is for instance present in at least one tube or conduit.

The heat which is generated directly and/or indirectly by the sun under the influence of solar radiation, and possibly the heat which is generated in the PV module during the conversion of the electromagnetic radiation into electric current as heat loss, is transferred at least partially to the tube or conduit and conducted to the heat transfer medium. The heat transfer medium is thereby thermally excited, i.e. the thermal energy increases owing to, among other things, the effect of solar radiation energy.

The combination of a PV module with a solar thermal module is usually referred to as a hybrid collector (hereafter also a collector). In a framework of the collector the modules are arranged or disposed such that the solar radiation acts directly on the PV module. In connection with the direction of propagation of the solar radiation, the solar thermal module is generally disposed behind the PV module. The solar thermal module can for instance also be disposed under the PV module, since the direction of propagation of the solar radiation is substantially vertical or comprises at least one vertical component.

PV systems, which convert PV solar radiation into electricity, are frequently disposed on buildings, particularly on roofs, and other suitable open areas. At least a part of the electrical energy required in the building or in the appliance can here be generated directly from the solar radiation energy or solar radiation in self-sustaining manner. If more energy is generated by the PV systems than is needed in the building, this results in a positive energy balance of the building because the excess energy can be fed into the power grid in the form of electric current. This reduces the energy costs or, if the balance is positive, can even generate financial income.

The problem with the use of solar radiation in many geographical regions is that solar radiation is at least some of the time insufficient to fully cover the energy and electricity requirements of a building. Especially in the dark or in bad weather the PV system cannot generate any electricity due to the absence of direct sunlight. The efficiency of PV energy generation is moreover far below 50% because a part of the incoming solar energy is lost as waste heat, which only heats the PV system and the area surrounding it.

Described in EP patent 2694885 is a PV thermal module for combined generation of energy and heat. Air is used here to transfer the thermal energy from the PV module to the solar thermal module. The solar thermal module serves to absorb thermal energy generated through solar energy in particular. A heat pump is here provided at least partially with heat energy and electricity. This application has a number of drawbacks:
- the resulting temperatures on the PV module as a result of radiation absorption are not supplied directly to the heat pump cycle, but reduced by the thermal resistance of the air meander, which results in a decreased efficiency of the heat pump;
- due to the insulating air gap between the PV module and the solar thermal module, the PV module is cooled to only a limited extent during operation of the heat pump, whereby the electrical conversion efficiency is merely sub-optimal.

Likewise described in the international patent application WO 2018033409 is a PV thermal module wherein the surfaces of the heat transfer devices which are in contact with the ambient air however lie transversely of the surface of the PV module, whereby the contact surface of the PV module with the heat transfer devices is only small. A relatively large space of up to 50 mm between the heat exchangers further provides a small total surface area to heat exchangers.

The invention has for its object to design a solar thermal module for the conversion of thermal energy into heat. A further object is to design a PVT device for efficiently converting solar energy into electric current. In addition, this device must be capable of being produced as efficiently as possible.

The present invention has for its object to provide a device of the type stated in the preamble, this being solar thermal module (2) for the conversion of solar energy into heat, comprising at least one tube in meander form (4a) having therearound an at least substantially seamlessly fitting extrusion profile (5a), wherein the tube (4a) is substantially D-shaped in cross-section and the extrusion profile (5a) has a corresponding D-shape, wherein a liquid or gaseous heat carrier is situated in the at least one tube (4a). With these shapes of the tube and the D-shape of the extrusion profile in which this tube fits precisely the contact surface between tube and extrusion profile is increased, whereby the transfer of thermal energy becomes optimal. The extrusion profiles can have different shapes, but for a favourable heat transfer a large surface area with for instance fin-like structures is favourable.

The solar thermal module (2) according to the invention preferably comprises a second tube in meander form (4b) having therearound an at least substantially seamlessly fitting extrusion profile (5b), wherein the tube (4b) is likewise D-shaped in cross-section and the extrusion profile (5b) has a corresponding D-shape, wherein a liquid or gaseous heat carrier is situated in the second tube (4b). The tubes in meander form more preferably each have alternately a shorter and longer bent side of the meander form and do not cross each other, whereby the available space inside the solar thermal module is utilized optimally. These longer and shorter bends are more preferably D-shaped.

The extrusion profiles (5a, 5b) are preferably formed from a metal or a metal alloy, particularly from aluminium. The tube (4a) or the tubes (4a, 4b) are further particularly formed from a metal or a metal alloy, particularly from copper. The liquid or gaseous heat carrier preferably consists of glycol, nanofluid or a refrigerant. Frequently used refrigerants are hydrofluorocarbons, alkanes (butane, propane, isobutane), propylene, ammonia and carbon dioxide.

The present invention also provides a photovoltaic thermal (PVT) device for the combined conversion of solar energy into electric current and heat, comprising a solar thermal module (2) according to the invention as described above for the conversion of solar energy into heat, wherein the extrusion profile (5a) or the extrusion profiles (5a, 5b) are attached substantially seamlessly to a photovoltaic (PV) plate (1). This extrusion profile or these extrusion profiles are preferably connected to the PV plate (1) on either side of the tube (4a) over the whole surface, which is possible in favourable manner when the solar thermal module (2) is laminated and with two tubes in meander form which do not cross each other, and so lie in one plane. The short and long bent sides of the tubes in meander form preferably have here a D-shape, these fitting together here without crossing each other.

The PVT device according to the invention is preferably incorporated in a framework (6), wherein the PV plate (1) and the solar thermal module (2) are disposed inside the frame (6) such that the solar radiation acts directly on the PV plate (1) and the solar thermal module (2) is situated substantially behind the PV plate (1) in the direction of propagation of the solar radiation, which also forms an aspect of the invention. Since the solar thermal module (2) is attached substantially seamlessly to the photovoltaic (PV) plate (1), thermal energy can be absorbed by the extrusion profile (5a) and be transferred via the tube (4a) to the carrier which is transported in the tube (4a) and is discharged therethrough.

Another aspect of the invention is formed by a method for converting solar energy into electric current and heat in a PVT device according to the invention, wherein the incoming light energy is converted in the photovoltaic plate (1) at least partially photovoltaically into electric current and wherein the heat, produced by the effect of the solar radiation energy or otherwise produced, such as residual heat, is absorbed by the extrusion profile (5a) or the extrusion profiles (5a, 5b) and is transferred to respectively the at least one tube (4a) or tubes (4a, 4b) in the respective heat carrier or heat carriers transported in liquid or gaseous form.

In the solar thermal module according to the invention solar energy is converted into heat very efficiently in that the greatest possible surface area is brought into contact with the tube around the heat carrier via the thermally conductive material of the extrusion profiles. The tube which surrounds the heat carrier lies substantially seamlessly in the extrusion profile. In addition, the tube has a D-shape so that the contact with the extrusion profile which is likewise D-shaped is as great as possible.

A further advantage of the solar thermal module is that it can be produced particularly efficiently, wherein tubes arranged in meander form are arranged with tight fit in extrusion profiles, without welding and with little soldering. The extrusion profiles themselves can advantageously also be cast in one mould over the whole long side of the meander form of the tube.

A photovoltaic thermal (PVT) device for combined conversion of light and thermal energy into electric current forms a subsequent aspect of the invention. This device comprises the solar thermal module as described above, wherein the extrusion profile or the extrusion profiles in meander form are preferably attached substantially seamlessly, for instance by glueing, to a photovoltaic plate (PV) such as for instance a solar panel. Each tube further lies in the plane of the extrusion profile which runs parallel or substantially parallel to the photovoltaic plate (PV). Solar energy can thus be converted into both electric current and heat with this PVT device. Heat can furthermore also be efficiently recovered from condensation of water vapour, from wind and from air, mainly by application of the large surface area of the extrusion profiles around the tubes with heat carriers. The solar thermal module according to the invention can also be used advantageously in other manner, such as for instance in a vertical screen such as a garden fence.

The PVT device according to the invention can be placed in a framework in efficient manner in that the framework with the PV glass plate on the outer side is directed towards the sun during use, adjacently of the solar thermal module according to the invention which is mounted thereon on the inner side inside the framework, for instance by means of lamination. Energy can also be recovered advantageously in the form of condensation, rain and wind from the outer side of the glass plate.

The present invention is further elucidated on the basis of the following drawings of the solar thermal module (2) according to the invention.
Figure 1a: Oblique top view of the photovoltaic thermal (PVT) device with the solar thermal module (2) with D-shaped tubes (4a, 4b) in meander form, attached seamlessly to PV plate (1) via the extrusion profiles (5), received in a framework (6).
Figure 1b: as figure 1a, but with the pipes in meander form and the extrusion profiles shown separately (not attached).
Figure 2: Oblique front view of two D-shaped extrusion profiles (5) with fin-like protrusions.

The figures are schematic and not drawn to scale. Corresponding parts are designated in the figures with the same reference numerals.

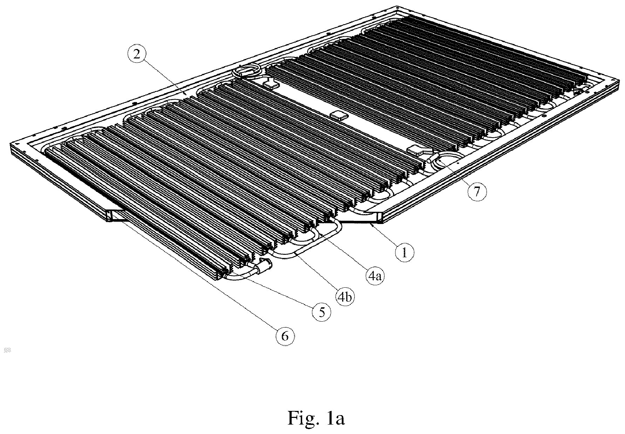

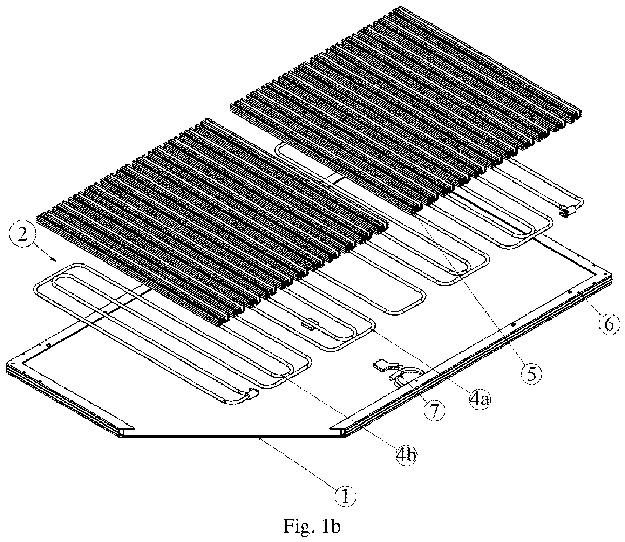

Figures 1a and 1b show the solar thermal module according to the invention, in which the meander structure of the tubes is clearly visible. Figure 1b in particular clearly shows how the extrusion profiles can be arranged seamlessly around the pipes in meander form. The meander forms each have alternately a shorter and a longer bent side, and do not cross each other. In this way the mutually fitting tubes lie in one plane and can be attached seamlessly to the PV plate. Optimal heat transfer from the environment to the heat carriers takes place by application of this structure. This structure also provides optimal space for for instance a junction box (7), inside which electrical connections are situated.

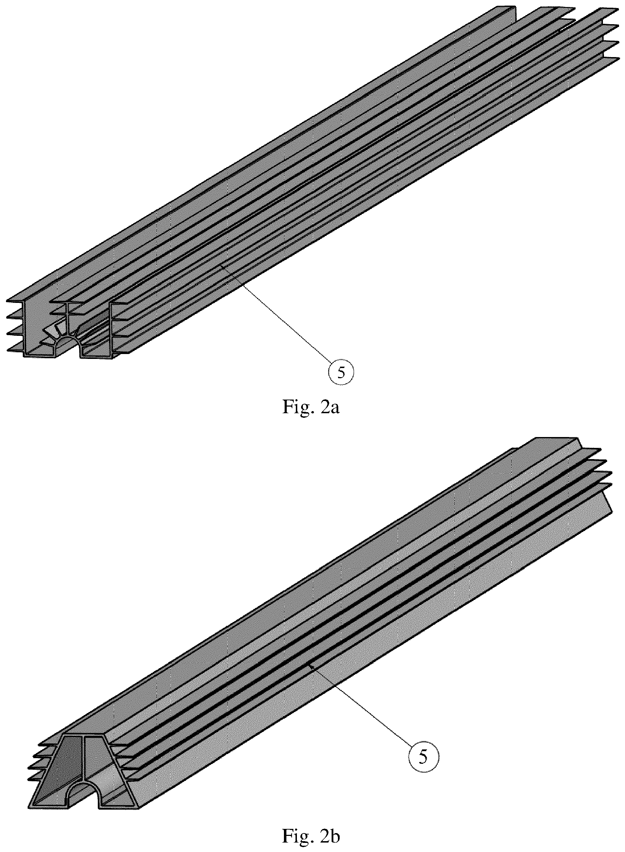

Figures 2a and 2b show two examples of extrusion profiles with their D-shape fitting seamlessly around the D-shaped tubes as applied in the solar thermal module according to the invention. The application of other extrusion profiles which fit around D-shaped tubes, which result in efficient heat transfer and thereby in efficient conversion of solar energy into electric current and heat, however also falls within the scope of protection of the invention.

Although the invention has been elucidated above on the basis of several embodiments and application, it will be apparent that the invention is by no means limited thereto. On the contrary, many other variations are possible within the scope of the invention for the person with ordinary skill in the art.

## Claims

1. Solar thermal module (2) for the conversion of solar energy into heat, comprising at least one tube in meander form (4a) having therearound an at least substantially seamlessly fitting extrusion profile (5a), wherein the tube (4a) is substantially D-shaped in cross-section and the extrusion profile (5a) has a corresponding D-shape, wherein a liquid or gaseous heat carrier is situated in the at least one tube (4a).

2. Solar thermal module (2) according to claim 1, comprising a second tube in meander form (4b) having therearound an at least substantially seamlessly fitting extrusion profile (5b), wherein the tube (4b) is likewise D-shaped in cross-section and the extrusion profile (5b) has a corresponding D-shape, wherein a liquid or gaseous heat carrier is situated in the at least one tube (4b).

3. Solar thermal module (2) according to claim 2, wherein the tubes in meander form each have alternately a shorter and a longer bent side of the meander form and do not cross each other.

4. Solar thermal module (2) according to each of the claims 1-3, wherein the shorter and a longer bent side of the tubes in meander form are D-shaped.

5. Solar thermal module (2) according to each of the claims 1-4, wherein the extrusion profile (5a) or the extrusion profiles (5a, 5b) are formed from a metal or a metal alloy, particularly from aluminium.

6. Solar thermal module (2) according to each of the claims 1-5, wherein the tube (4a) or the tubes (4a, 4b) are formed from a metal or a metal alloy, particularly from copper.

7. Solar thermal module (2) according to each of the claims 1-6, wherein the liquid or gaseous heat carrier consists of glycol, nanofluid or a refrigerant.

8. Photovoltaic thermal (PVT) device for the combined conversion of solar energy into electric current and heat, comprising a solar thermal module (2) according to each of the claims 1-7 for the conversion of solar energy into heat, wherein the extrusion profile (5a) or the extrusion profiles (5a, 5b) are attached substantially seamlessly to a photovoltaic (PV) plate (1).

9. Framework comprising a PVT device according to claim 8, wherein the PV plate (1) and the solar thermal module (2) are disposed inside a frame (6) such that the solar radiation acts directly on the PV plate (1) and the solar thermal module (2) is situated substantially behind the PV plate (1) in the direction of propagation of the solar radiation.

10. Method for converting solar energy into electric current and heat in a PVT device according to claim 8 or 9, wherein the incoming light energy is converted in the photovoltaic plate (1) at least partially photovoltaically into electric current and wherein the heat, produced by the effect of the solar radiation energy or otherwise produced, such as residual heat, is absorbed by the extrusion profile (5a) or the extrusion profiles (5a, 5b) and is transferred to respectively the at least one tube (4a) or tubes (4a, 4b) in the respective heat carrier or heat carriers transported in liquid or gaseous form.
